# FASCICULE DE BREVET EUROPEEN

(11) **EP 2 954 234 B1**
(45) Date de publication et mention de la délivrance du brevet: **31.05.2017**
(21) Numéro de dépôt: 14705851.5
(22) Date de dépôt: 30.01.2014
(51) Int. Cl.: F16H 61/24, F16H 61/36, F16C 1/10

(54) **ÉLÉMENT ANTIVIBRATOIRE POUR COMMANDE DE BOÎTE DE VITESSES MÉCANIQUE A CÂBLES**
VIBRATIONSHEMMENDES ELEMENT FÜR EINE MIT KABELN BETÄTIGTE, MECHANISCHE GETRIEBESTEUERUNG
VIBRATION-INHIBITING ELEMENT FOR A CABLE-OPERATED MECHANICAL GEARBOX CONTROL

(30) Priorité: 08.02.2013 FR 1351089
(43) Date de publication de la demande: 16.12.2015
(73) Titulaire: Peugeot Citroën Automobiles SA, 78140 Vélizy Villacoublay (FR)
(72) Inventeur: POIRRIER, Pascal, F-70290 Champagney (FR); SAILLARD, Laurent, F-90400 Danjoutin (FR)
(74) Mandataire: Rosenberg, Muriel Sylvie
(86) Numéro de dépôt international: PCT/FR2014/050170
(87) Numéro de publication internationale: WO 2014/122381

(56) Documents cités:
- EP-A1- 1 426 638
- FR-A1- 2 977 923
- JP-A- 2001 115 414

## Description

La présente invention se rapporte à un élément antivibratoire pour commande de boîte de vitesses mécanique à câbles, ainsi qu'à un dispositif de commande de boîte de vitesses mécanique à câbles et un véhicule automobile associés.

L'invention appartient au domaine des commandes de vitesses à câbles pour boîtes de vitesses manuelles, dites aussi mécaniques.

Afin de traiter l'acoustique véhicule et en particulier d'amortir les vibrations acoustiques transmises via le groupe motopropulseur d'un véhicule automobile à son habitacle par le biais des câbles de commande de vitesses, on utilise actuellement des masses acoustiques en montant une masse sur chaque câble, à savoir, une masse sur le câble de sélection de rapport de vitesses et une masse sur le câble de passage de rapport de vitesses.

Ainsi, le document FR-A-2 977 923 divulgue un support écarteur de câble de commande de boîte de vitesse constitué de masses d'inertie disposées autour de chaque câble et formant un système d'amortissement de vibrations comportant toutes les caractéristiques du préambule de la revendication 1. Ces solutions antérieures présentent l'inconvénient de nécessiter de dégager un volume d'implantation conséquent pour loger les deux masses et ménager suffisamment d'espace entre elles pour éviter tout choc entre elles et en débattement.

La présente invention a pour but de remédier à cet inconvénient.

Dans ce but, la présente invention propose un élément antivibratoire pour commande de boîte de vitesses mécanique à câbles, remarquable en ce qu'il comporte une masse présentant un premier logement adapté à recevoir un câble de sélection de rapport de vitesses et un second logement adapté à recevoir un câble de passage de rapport de vitesses.

Ainsi, l'invention permet, grâce à la compacité de l'élément antivibratoire proposé, d'implanter à moindre encombrement les câbles commande de boîte de vitesses avec l'élément antivibratoire entre le tunnel et l'écran thermique d'échappement.

Selon une caractéristique particulière, l'élément antivibratoire comporte en outre un manchon de protection disposé autour de la masse.

Selon une caractéristique particulière, la masse est constituée par l'assemblage d'une demi-masse supérieure et d'une demi-masse inférieure.

Selon une caractéristique particulière, les demi-masses supérieure et inférieure sont assemblées au moyen de vis ou tout autre système d'assemblage.

Selon une caractéristique particulière, la masse est réalisée dans un matériau métallique ou encore dans un alliage ferreux.

En variante, la masse peut aussi être réalisée dans un matériau plastique haute densité.

Selon une caractéristique particulière, la masse est réalisée par injection par gravité ou sous pression.

Dans le même but que celui indiqué plus haut, la présente invention propose également un dispositif de commande de boîte de vitesses mécanique à câbles, remarquable en ce qu'il comporte un élément antivibratoire tel que succinctement décrit ci-dessus.

Toujours dans le même but que celui indiqué plus haut, la présente invention propose en outre un véhicule automobile, remarquable en ce qu'il comporte un dispositif de commande de boîte de vitesses mécanique à câbles tel que succinctement décrit ci-dessus.

D'autres aspects et avantages de l'invention apparaîtront à la lecture de la description qui suit de modes particuliers de réalisation, donnés à titre d'exemples non limitatifs et en référence aux dessins qui l'accompagnent, dans lesquels :
- la figure 1 est une représentation schématique d'une vue d'ensemble d'un dispositif de commande de boîte de vitesses mécanique à câbles comportant un élément antivibratoire conforme à la présente invention, dans un mode particulier de réalisation ;
- la figure 2 est une vue schématique en perspective d'une masse faisant partie d'un élément antivibratoire conforme à la présente invention, dans un mode particulier de réalisation ;
- la figure 3 est une vue schématique en perspective d'un manchon de protection faisant partie d'un élément antivibratoire conforme à la présente invention, dans un mode particulier de réalisation ;
- la figure 4 est une vue schématique en perspective d'un élément antivibratoire conforme à la présente invention, dans un mode particulier de réalisation ; et
- la figure 5 est une représentation schématique d'une extrémité d'un élément antivibratoire conforme à la présente invention, dans un mode particulier de réalisation.

On considère dans le cadre de la présente invention un véhicule automobile comportant une boîte de vitesses manuelle, dite aussi mécanique, à commande par câbles. Ainsi, le dispositif de commande de la boîte de vitesses comporte un câble de sélection de rapport de vitesses et un câble de passage de rapport de vitesses.

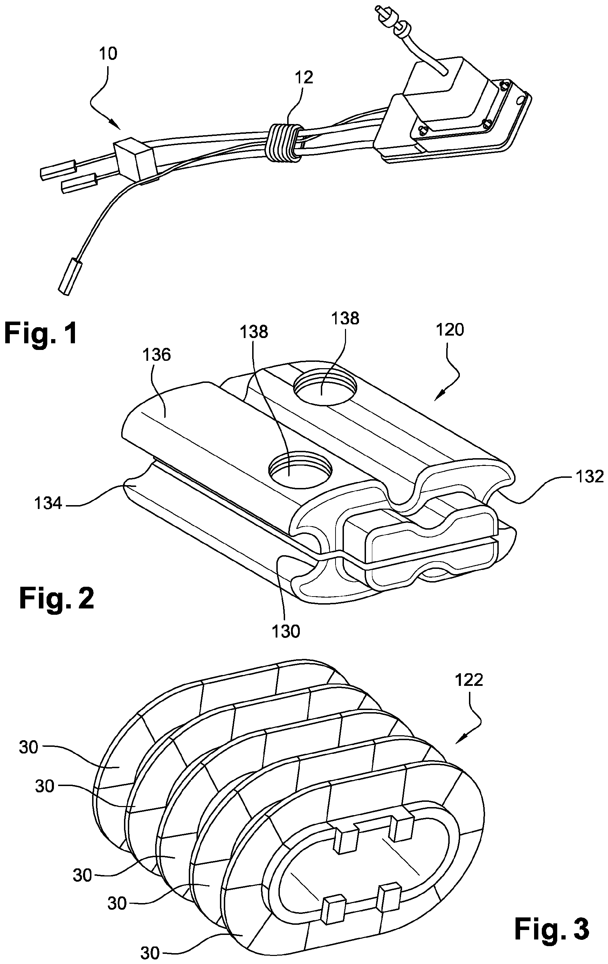

Comme le montre la figure 1, conformément à la présente invention, un élément antivibratoire 12 est assemblé de façon combinée sur les câbles de passage et de sélection du dispositif 10 de commande de boîte de vitesses.

Cet élément antivibratoire 12 comporte d'une part une masse 120 illustrée séparément sur la figure 2 et d'autre part un manchon de protection 122 disposé autour de la masse 120 et illustré séparément sur la figure 3.

Comme le montre la figure 2, la masse est constituée d'une demi-masse inférieure 134 et d'une demi-masse supérieure 136 disposées en regard l'une de l'autre. Chaque demi-masse présente au moins un orifice 138 adapté à recevoir des éléments pour fixer des deux demi-masses entre elles, tels que des vis, auquel cas les orifices sont des trous taraudés.

Les deux demi-masses sont avantageusement fixées entre elles par un assemblage vissé, sous un couple de serrage maîtrisé par le biais d'une butée fixe, afin de contrôler la pression sur la gaine des deux câbles de commande enfermés dans l'élément antivibratoire.

La masse 120 comporte en outre un premier logement 130 permettant le passage d'un câble de commande, par exemple un câble de passage de rapport de vitesses, ainsi qu'un second logement 132 permettant le passage d'un autre câble de commande, par exemple un câble de sélection de vitesses. Ces logements sont prévus pour moitié dans la demi-masse inférieure 134 et pour moitié dans la demi-masse supérieure 136.

La masse acoustique 120 peut être réalisée, soit dans un matériau métallique ou un alliage ferreux présentant une densité de matière suffisamment élevée, soit dans un mélange plastique haute densité, éventuellement avec charge métallique.

Les techniques pouvant être mises en oeuvre pour la réalisation de la masse acoustique 120 sont l'injection par gravité, ou sous pression.

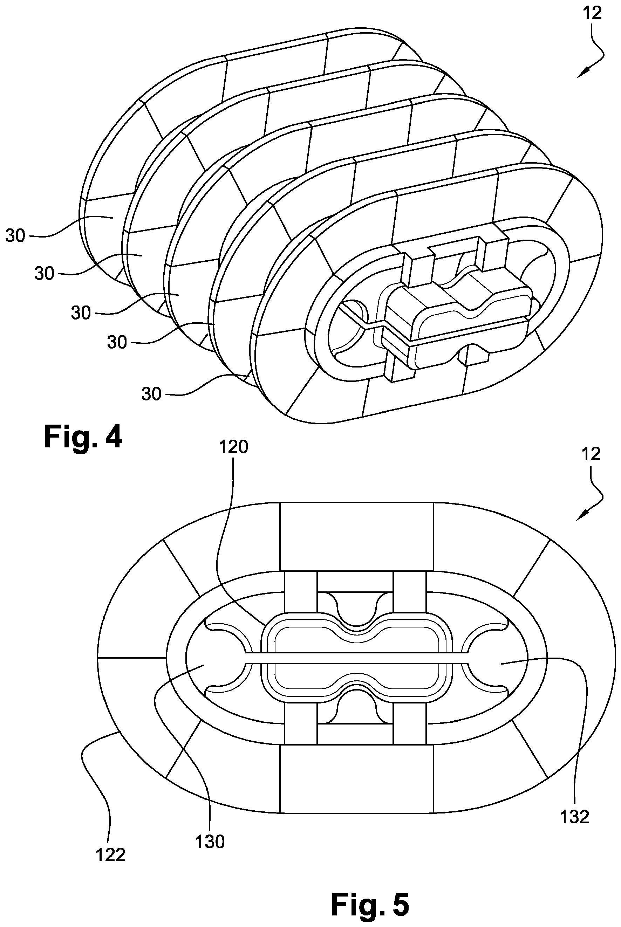

La figure 3 illustre un mode particulier de réalisation d'un manchon de protection 122 qui, une fois assemblé avec la masse 120, l'entoure entièrement comme illustré sur les figures 4 et 5, de façon à éviter les contacts entre la masse 120 et son environnement, qui seraient susceptibles d'engendrer du bruit.

Les figures 3 et 4 montrent que le manchon 122 est pourvu d'une série de lèvres 30 permettant de protéger les câbles de commande d'un environnement agressif.

Le manchon 122 est de forme sensiblement cylindrique avec un orifice central sur toute sa longueur qui lui permet de recevoir la masse 120. Il est par exemple réalisé en caoutchouc.

Ainsi, la masse 120 modifiant le mode de résonance entre câble et gaine de par sa masse propre et la maîtrise du serrage de l'assemblage, l'élément antivibratoire proposé par la présente invention atténue les vibrations transmises via le groupe motopropulseur du véhicule à son habitacle par le biais des câbles de commande. Cela est efficace sur la plage de régime du groupe motopropulseur et en particulier sur les moyennes et hautes fréquences.

## Revendications

1. Elément antivibratoire (12) pour commande (10) de boîte de vitesses mécanique à câbles, comportant une masse (120) présentant un premier logement (130) adapté à recevoir un câble de sélection de rapport de vitesses et **caractérisé en ce qu'**il comporte un second logement (132) adapté à recevoir un câble de passage de rapport de vitesses.

2. Elément antivibratoire (12) selon la revendication 1, **caractérisé en ce qu'**il comporte en outre un manchon (122) de protection disposé autour de ladite masse (120).

3. Elément antivibratoire (12) selon la revendication 1 ou 2, **caractérisé en ce que** ladite masse (120) est constituée par l'assemblage d'une demi-masse supérieure (136) et d'une demi-masse inférieure (134).

4. Elément antivibratoire (12) selon la revendication 3, **caractérisé en ce que** les demi-masses (134, 136) supérieure et inférieure sont assemblées au moyen de vis.

5. Elément antivibratoire (12) selon l'une quelconque des revendications précédentes, **caractérisé en ce que** ladite masse (120) est réalisée dans un matériau métallique.

6. Elément antivibratoire (12) selon l'une quelconque des revendications 1 à 4, **caractérisé en ce que** ladite masse (120) est réalisée dans un alliage ferreux.

7. Elément antivibratoire (12) selon l'une quelconque des revendications 1 à 4, **caractérisé en ce que** ladite masse (120) est réalisée dans un matériau plastique haute densité.

8. Elément antivibratoire (12) selon l'une quelconque des revendications précédentes, **caractérisé en ce que** ladite masse (120) est réalisée par injection par gravité ou sous pression.

9. Dispositif (10) de commande de boîte de vitesses mécanique à câbles, **caractérisé en ce qu'**il comporte un élément antivibratoire (12) selon l'une quelconque des revendications précédentes.

10. Véhicule automobile, **caractérisé en ce qu'**il comporte un dispositif (10) de commande de boîte de vitesses mécanique à câbles selon la revendication 9.

## Patentansprüche

1. Schwingungsdämpfendes Element (12) für eine Steuerung (10) eines mechanischen Seilzug-Schaltgetriebes, eine Masse (120) umfassend, die eine erste Aufnahme (130) aufweist, die ausgeführt ist, um ein Seil zur Auswahl eines Ganges aufzunehmen, und **dadurch gekennzeichnet, dass** es eine zweite Aufnahme (132) umfasst, die ausgeführt ist, um ein Schaltseil eines Ganges aufzunehmen.

2. Schwingungsdämpfendes Element (12) nach Anspruch 1, **dadurch gekennzeichnet, dass** es darüber hinaus eine Muffe (122) zum Schutz umfasst, die um die besagte Masse (120) herum angeordnet ist.

3. Schwingungsdämpfendes Element (12) nach Anspruch 1 oder 2, **dadurch gekennzeichnet, dass** die besagte Masse (120) durch die Zusammensetzung einer oberen Halbmasse (136) und einer unteren Halbmasse (134) gebildet wird.

4. Schwingungsdämpfendes Element (12) nach Anspruch 3, **dadurch gekennzeichnet, dass** die obere und untere Halbmasse (134, 136) mithilfe von Schrauben zusammengesetzt werden.

5. Schwingungsdämpfendes Element (12) nach irgendeinem der vorhergehenden Ansprüche, **dadurch gekennzeichnet, dass** die besagte Masse (120) aus einem metallischen Werkstoff hergestellt ist.

6. Schwingungsdämpfendes Element (12) nach irgendeinem der Ansprüche 1 bis 4, **dadurch gekennzeichnet, dass** die besagte Masse (120) aus einer eisenhaltigen Legierung hergestellt ist.

7. Schwingungsdämpfendes Element (12) nach irgendeinem der Ansprüche 1 bis 4, **dadurch gekennzeichnet, dass** die besagte Masse (120) aus einem hochdichten Kunststoffmaterial hergestellt ist.

8. Schwingungsdämpfendes Element (12) nach irgendeinem der vorhergehenden Ansprüche, **dadurch gekennzeichnet, dass** die besagte Masse (120) durch Einspritzen über die Schwerkraft oder unter Druck hergestellt wird.

9. Vorrichtung (10) zur Steuerung eines mechanischen Seilzug-Schaltgetriebes, **dadurch gekennzeichnet, dass** sie ein schwingungsdämpfendes Element (12) nach irgendeinem der vorhergehenden Ansprüche umfasst.

10. Kraftfahrzeug, **dadurch gekennzeichnet, dass** es eine Vorrichtung (10) zur Steuerung eines mechanischen Seilzug-Schaltgetriebes nach Anspruch 9 umfasst.

## Claims

1. Vibration-inhibiting element (12) to command (10) a cable-operated mechanical gearbox, including a mass (120) presenting a first housing (130) suitable to receive a gear selection cable and **characterised in that** it includes a second housing (132) suitable for receiving a cable to manipulate the gears.

2. Vibration-inhibiting element (12) according to claim 1, **characterised in that** it includes in addition a protective sleeve (122) fitted around the said mass (120).

3. Vibration-inhibiting element (12) according to claim 1 or 2, **characterised in that** the said mass (120) is manufactured by assembling an upper semi-mass (136) and a lower semi-mass (134).

4. Vibration-inhibiting element (12) according to claim 3 **characterised in that** the upper and lower semi-masses (134, 136) are assembled using screws.

5. Vibration-inhibiting element (12) according to one of the previous claims **characterised in that** the said mass (120) is made from a metallic material.

6. Vibration-inhibiting element (12) according to one of the claims 1-4, **characterised in that** the said mass (120) is made from a ferrous alloy.

7. Vibration-inhibiting element (12) according to one of the claims 1-4, **characterised in that** the said mass (120) is made from high density plastic.

8. Vibration-inhibiting element (12) according to one of the previous claims **characterised in that** the said mass (120) is made from a metallic material.

9. Device (10) for commanding a cable-operated mechanical gearbox, **characterised in that** it includes a vibration-inhibiting element (12) according to one of the previous claims.

10. Motor vehicle, **characterised in that** in includes a device (10) for commanding a cable-operated mechanical gearbox according to claim 9.
